(19) Europäisches Patentamt
European Patent Office
Office européen des brevets

(11) Publication number: **0 055 226**
**A1**

## (12) EUROPEAN PATENT APPLICATION

(21) Application number: 81830149.1

(51) Int. Cl.³: **C 09 D 13/00**

(22) Date of filing: 26.08.81

(30) Priority: 12.12.80 IT 2662280

(43) Date of publication of application: 30.06.82
Bulletin 82/26

(84) Designated Contracting States: AT BE CH DE FR GB LI LU NL SE

(71) Applicant: **FABBRICA ITALIANA LAPIS ED AFFINI (F.I.L.A.) S.p.A., Via Pozzone, 5, Milano (IT)**

(72) Inventor: **Montanari, Uberto, Casadio, Via Borgognissanti 25, Firenze (IT)**

(74) Representative: **Zorzoli, Franco, c/o BUGNION S.p.A. Via Carlo Farini 81, I-20159 Milan (IT)**

(54) Scented leads for pencils.

(57) Scented leads for pencils are prepared by dipping coloured leads into a grease bath which holds substances which give scent to leads. By means of such leads it is possible to transfer scent to paper by means of praphic marks.

EP 0 055 226 A1

ACTORUM AG

## Scented leads for pencils

The present invention relates to new scented leads for pencils, processes for the preparation thereof and pencils which hold said new leads as writing part.

More particularly, the present invention provides, in one aspect thereof, new leads for pencils which are endowed with substances which are able to exhale scents.

The invention also provides, in another aspect, a novel process for preparing these new leads, which comprises giving to leads said substances which are able to exhale scents through immersion into the grease bath.

Finally, the invention also provides pencils which have said new leads as writing part.

Only known attempts for giving to pencils peculiar scents were till now limited to embodiments which comprise to incorporate said substances which are able to exhale scents, substances which will be called hereinafter "flavours" for the sake of brevity, into the external covering of pencils. However the limits of that technical solution are apparent; as a matter of fact it is not possible to transfer the scent to the graphic mark, the writing or the drawing made by means of that kind of pencils.

It has been now surprisingly found, and this is an object of the present invention, that it is possible to overcome that disadvantage by means of leads for pencils endowed with "flavours". Said "flavours" are given to leads, and this is another object of the present invention, through the immersion into the grease bath.

Said grease bath conveniently consists in a mixture of two waxes, one having drop point in the range from 55.70° to 59.70°, the other having drop point in the range from 85.20° to 89.20°, and "flavour", which is generally an essential oil; per cent ratios of bath ingredients can be varied according to the following ratios:

- lower drop point wax            : 30-50%
- higher drop point wax           : 15-25%
- "flavour"                       : 30-50%

Lower drop point wax advantageously is a vegetable wax having drop point 57.70° and higher drop point wax advantageously is carnauba wax having drop point 87.20°; the "flavour" usefully consists of natural or synthetic essential mixtures which are normally used in perfumery and are free from mutagenic substances and natural flavours together with inert and non-toxic carriers, provided that said "flavour " is resistant to temperatures which are higher than 110°C. The "flavour" is advantageously carried by ethylenglycol and benzyl alcohol and it is resistant to a temperature from 110°C to 120°C.

For example, and without any limiting intention, a list of "flavours" which have the above mentioned characteristics is given hereinbelow; all the "flavours" are produced by the firm "Variati": Lavanda K50F (lavender), Sandalo 78182 (sandal), Rosa 3009 (rose), Violetta 78191/1 (sweet violet), Giacinto 78191 (hyacinth), Tiglio 78134/T (lime), Banana 7992 (banana), Arancio 78005 (orange), Fragola 7982 (strawberry), Mirtillo 7987 (bilberry), Peppermint 78187, Liquirizia 7920 (liquorice). Anyway, it is understood that any "flavour" having the above mentioned characteristics can be used for the exploitation of the present invention.

Advantageously, per cent ratios of grease bath ingredients can be varied according to the following ratios:

- vegetable wax with drop point 57.70°                  : 38-42%
- carnauba wax with drop point 87.20°                   : 19-21%
- "flavour"                                             : 38-42%

More advantageously, per cent ratios of grease bath ingredients are:

- vegetable wax  with drop point 57.70°                 :    40%
- carnauba wax with drop point 87.20°                   :    20%
- "flavour"                                             :    40%

Moreover, according to another aspect of the present invention, pigments which give to leads colours are selected so as to avoid transfers to the grease bath which holds the "flavour", in order to have a final product of satisfying quality.

Therefore, said pigments are advantageously selected among pigments which show a fats resistance higher than 3, said fats resistance being measured by means of the international scale going from 1 to 5; more advantageously, said pigments show a fats resistance of 5. For example, and without any limiting intention, pigments which possess the above mentioned characteristics can be easily obtained from the firms "Acna", "Basf", "Bayer".

According to the invention, the mixture for the leads can be carried out by wet-mixing utilizing suitable fillers, dispersants, binding agents, lubricants, anti-fermentative agents and pigments together with micronized kaolin.

According to an embodiment of the present invention, for preparing the mixture for the leads English as well as French micronized kaolin, as both show suitable characteristics of greasiness, air sifted talc as filler, methylcellulose as binding agent and, moreover, "Riccadil TPL/AL", non silicone dispersant produced by "Winthropp", "Lunadip K", ceresin-type lubricant produced by "Spica", "Dowcil", anti-fermentative agent produced by "Dow Chemical", and pigments for obtaining the desired colour are used. All those materials can be used in percentages from 40% to 72% for the micronized kaolin, from 2% to 26% for the air sifted talc, from 2% to 4% for the methylcellulose, from 1% to 2% for the "Riccadil TPL/AL", from 1% to 4% for the "Lunadip K", from 0% to 1% for the "Dowcil" and from 4% to 32% for pigments. The mixing of raw materials is carried out in a kneader, after adding 35% of water; it is a hot-mixing and it is carried out at reduced pressure, in order to lower the water percentage to about 25%.

When the moisture content attains the desired value, the mixture is passed through a multi-die by means of a press, in order to increase its degree of homogeneity.

So obtained strings are converted into cylindrical cakes by means of a vacuum-press; the resulting cakes are put into a draw-plate for extrusion of actual leads.

Leads, after extrusion, are dried in an oven, at a temperature from 130°C to 140°C.

After staying in the desiccation oven, leads are dipped into the grease bath, which is composed of vegetable wax with drop point 57.70°, in the percentage of 40%, of carnauba wax with drop point 87.20°, in the percentage of 20%, and of the selected "flavour", in the percentage of 40%.

The time of dipping into the grease bath, which has its best fluidity at 110°C, can be varied according to colour to be coupled with the selected "flavour"; that time is from 1.5 to 3 hours.

Leads are hence ready for the following stages, which are the usual stages for obtaining a pencil when utilizing an usual coloured lead, namely sticking, shaping, coating and finishing of the wooden covering.

According to a preferred embodiment of the present invention, colour-scent couplings are those reported hereinbelow, in Table I.

Table I

| Colour | Scent |
|--------|-------|
| Pink | Rose |
| Yellow ochre | Liquorice |
| Emerald green | Lime |
| Lemon yellow | Banana |
| Dark yellow | Orange |
| Light violet | Violet |
| Orange | Orange |
| Prussian blue | Bilberry |
| Carmine | Rose |
| Natural raw Sienna | Sandal |
| Sky-blue | Lavender |
| Ultramarine | Lavender |
| Light yellow | Banana |
| Brown | Sandal |
| Light green | Mint |
| Vermilion | Strawberry |
| Black | Liquorice |
| Scarlet red | Strawberry and hyacinth |
| Purple | Hyacinth |
| Violet | Violet and bilberry |
| Dark green | Lime and mint |

The pencils which are manufactured utilizing the leads which are object of the present invention give scents which last about 24 hours when they are employed for writing on paper; moreover, said pencils maintain their properties more than 12 months.

The following examples illustrate some embodiments of the invention, without, however, being a limitation thereof.

### Example 1 - Lead of carmine colour

A kneader was filled by the following raw materials:

| | |
|---|---|
| - Micronized kaolin, in the percentage of | 56% |
| - Air sifted talc, in the percentage of | 29% |
| - Titanium White RS99 (produced by I.C.I.), in the percentage of | 6% |
| - Rubino (ruby) Acnalin B (produced by Acna), in the percentage of | 2% |
| - Tylose MCA50 (methylcellulose produced by Schroeder), in the percentage of | 3% |
| - Riccadil TPL/AL, in the percentage of | 1% |
| - Lunadip K, in the percentage of | 2% |
| - Dowcil, in the percentage of | 1% |

Water is added to that mixture in a ratio of 35% and the mixing starts. The mixture is homogeneous after about 3 hours, with a reduction of water percentage to 25%, by means of a hot (100°C) and reduced pressure (40 Torr) mixing. The mixture is then cooled and, in order to increase its homogeneity, it is passed through a multi-die by means of a press; the so obtained strings are converted into cylindrical cakes by means of a vacuum-press; the obtained cakes give the actual leads by means of extrusion. After drying in an oven at 135°C, the obtained leads are dipped into a grease bath for a period of three hours; the grease bath has the temperature of about 110°C and the following composition:

| | |
|---|---|
| - vegetable wax with drop point 57.70° | 40% |
| - Carnauba wax with drop point 87.20° | 20% |
| - Rosa 3009 ("Variati" production) | 40% |

After extraction from the bath and after cooling, leads are ready for following steps of sticking, shaping, coating and finishing of the wooden covering; those steps give the accomplished pencil.

Example 2 - Lead of pink colour

Operating as described in Example 1, but employing the following raw materials:

| | |
|---|---|
| - Micronized kaolin | 41% |
| - Air sifted talc | 25% |
| - Titanium white RS99 | 27% |
| - Helio Rosso (red) FGZ | 1% |
| - Tylose MCA 50 | 3% |
| - Lunadip K | 1% |
| - Dowoil | 1% |
| - Riccadil TPL/AL | 1%, |

the expected lead was obtained.

Example 3 - Lead of yellow ochre colour

Operating as described in Example 1, but employing the following raw materials:

| | |
|---|---|
| - Micronized kaolin | 51% |
| - Air sifted talc | 25% |
| - Pure Oxy Yellow 3178 | 15% |
| - Tylose MCA 50 | 3% |
| - Lunadip K | 3% |
| - Dowoil | 1% |
| - Riccadil TPL/AL | 1%, |

employing the "flavour" Liquirizia 7920 instead of Rosa 3009  and

- 8 -

keeping the lead into the grease bath for two hours, the expected lead was obtained.

Example 4 - Lead of emerald green colour

Operating as described in Example 1, but employing the following raw materials:

| | |
|---|---|
| - Micronized kaolin | 52% |
| - Air sifted talc | 26% |
| - Giallo (yellow) Helio sol. 5GX | 6% |
| - Heliogen Blue 7080 | 4% |
| - Tylose MCA 50 | 3% |
| - Titanium White RS99 | 5% |
| - Lunadip K | 2% |
| - Riccadil TPL/AL | 1% |
| - Dowcil | 1% |

and employing the "flavour" Tiglio 78134/T instead of Rosa 3009, the expected lead was obtained.

Example 5- Lead of lemon yellow colour

Operating as described in Example 3, but employing the following raw materials:

| | |
|---|---|
| - Micronized kaolin | 62% |
| - Air sifted talc | 2% |
| - Giallo (yellow) Helio 5GX | 3% |
| - Titanium White RS99 | 26% |
| - Tylose MCA 50 | 3% |
| - Lunadip K | 1% |
| - Dowcil | 1% |
| - Verde (green) Heliogen 8730D | 1% |
| - Riccadil TPL/AL | 1% |

and employing the "flavour" Banana 7992 instead of Liquirizia 7920, the expected lead was obtained.

Example 6 - Lead of dark yellow colour

Operating as described in Example 3, but employing the following raw materials:

| | |
|---|---|
| - Micronized kaolin | 61% |
| - Air sifted talc | 2% |
| - Titanium White RS99 | 26% |
| - Giallo (yellow) Helio 2GX | 5% |
| - Helio arancio (orange)Sold. RN | 1% |
| - Tylose MCA 50 | 2% |
| - Lunadip K | 1% |
| - Dowcil | 1% |
| - Riccadil TPL/AL | 1% |

and employing the "flavour" Arancio 78005 instead of Liquirizia 7920, the expected lead was obtained.

Example 7 - Lead of light violet colour

Operating as described in Example 1, but employing the following raw materials:

| | |
|---|---|
| - Micronized kaolin | 60% |
| - Air sifted talc | 20% |
| - Titanium White RS 99 | 8% |
| - Helio Violetto (violet) Sol. EB | 1% |
| - Helio Rosa (pink) Sol. E | 1% |
| - Tylose MCA 50 | 4% |
| - Lunadip K | 4% |
| - Riccadil TPL/AL | 2% |

and employing the "flavour" Violetta 78191/1 instead of Rosa 3009, the expected lead was obtained.

Example 8 - Lead of orange colour

Operating as described in Example 1, but employing the following raw materials:

| | |
|---|---|
| – Micronized kaolin | 55% |
| – Air sifted talc | 26% |
| – Titanium White RS99 | 3% |
| – Giallo (yellow) Helio Sol. 5GX | 4% |
| – Helio arancio (orange) RN | 6% |
| – Tylose MCA 50 | 3% |
| – Lunadip K | 1% |
| – Dowcil | 1% |
| – Riccadil TPL/AL | 1%, |

employing the "flavour" Arancio 78005 instead of Rosa 3009 and keeping the lead into the grease bath for two hours and a half, the expected lead was obtained.


Example 9 – Lead of Prussian blue colour

Operating as described in Example 1, but employing the following raw materials:

| | |
|---|---|
| – Micronized kaolin | 50% |
| – Air sifted talc | 20% |
| – Heliogen Blue 6840 | 13% |
| – Pure Oxy Black 3069 | 4% |
| – Tylose MCA 50 | 3% |
| – Riccadil TPL/AL | 1% |
| – Lunadip | 3% |
| – Dowcil | 1% |
| – Titanium White RS99 | 5% |

and employing the "flavour" Mirtillo 7987 instead of Rosa 3009, the expected lead was obtained.


Example 10 – Lead of natural raw Sienna colour

Operating as described in Example 8, but employing the following raw materials:

| | |
|---|---|
| – Micronized kaolin | 52% |

| | |
|---|---|
| - Air sifted talc | 26% |
| - Pure Oxy Yellow 3178 | 11% |
| - Pure Oxy Red 4551 | 2% |
| - Pure Oxy Black 3069 | 1% |
| - Tylose MCA 50 | 3% |
| - Lunadip K | 3% |
| - Dowcil | 1% |
| - Riccadil TPL/AL | 1% |

and employing the "flavour" Sandalo 78182 instead of Arancio 78005, the expected lead was obtained.

## Example 11 - Lead of sky-blue colour

Operating as described in Example 1, but employing the following raw materials:

| | |
|---|---|
| - Micronized kaolin | 62% |
| - Air sifted talc | 2% |
| - Titanium White RS99 | 29% |
| - Tylose MCA 50 | 3% |
| - Blue Heliogen 7080 | 1% |
| - Lunadip K | 1% |
| - Dowcil | 1% |
| - Riccadil TPL/AL | 1%, |

employing the "flavour" Lavanda K50F instead of Rosa 3009 and keeping the lead into the grease bath for one hour and a half, the expected lead was obtained.

## Example 12 - Lead of light yellow colour

Operating as described in Example 5, but employing the following raw materials:

| | |
|---|---|
| - Micronized kaolin | 62% |
| - Air sifted talc | 2% |
| - Titanium White RS99 | 26% |

| | |
|---|---|
| - Giallo (yellow) Helio 2GX | 4% |
| - Helio arancio (orange) RN | 1% |
| - Tylose MCA 50 | 3% |
| - Lunadip K | 1% |
| - Riccadil TPL/AL | 1%, |

the expected lead was obtained.


## Example 13 - Lead of brown colour

Operating as described in Example 10, but employing the following raw materials:

| | |
|---|---|
| - Micronized kaolin | 51% |
| - Air sifted talc | 26% |
| - Pure Oxy Red 3551 | 8% |
| - Pure Oxy Black 3069 | 8% |
| - Tylose MCA 50 | 3% |
| - Lunadip K | 2% |
| - Dowcil | 1% |
| - Riccadil TPL/AL | 1%, |

the expected lead was obtained.


## Example 14 - Lead of light green colour

Operating as described in Example 1, but employing the following raw materials:

| | |
|---|---|
| - Micronized kaolin | 62% |
| - Air sifted talc | 10% |
| - Titanium White RS99 | 15% |
| - Verde (green) Heliogen 8730D | 1% |
| - Giallo (yellow) Mon. V10.GH.ED | 6% |
| - Tylose MCA 50 | 3% |
| - Lunadip K | 1% |
| - Dowcil | 1% |
| - Riccadil TPL/AL | 1% |

and employing the "flavour" Peppermint 78187 instead of Rosa 3009, the expected lead was obtained.

## Example 15 - Lead of vermilion colour

Operating as described in Example 1, but employing the following raw materials:

| | |
|---|---|
| - Micronized kaolin | 71% |
| - Air sifted talc | 14% |
| - Helio Rosso (red) Sol. FG | 5% |
| - Helio Arancio (orange) Sold. RN | 3% |
| - Tylose MCA 50 | 3% |
| - Dowcil | 1% |
| - Riccadil TPL/AL | 1% |
| - Lunadip K | 2% |

and employing the "flavour" Fragola 7982 instead of Rosa 3009, the expected lead was obtained.

## Example 16- Lead of black colour

Operating as described in Examble 11, but employing the following raw materials:

| | |
|---|---|
| - Micronized kaolin | 52% |
| - Air sifted talc | 26% |
| - Carbon black 3069 | 14% |
| - Tylose MCA 50 | 4% |
| - Lunadip K | 2% |
| - Dowcil | 1% |
| - Riccadil TPL/AL | 1% |

and employing the "flavour" Liquirizia 7920 instead of Lavanda K50F, the expected lead was obtained.

## Example 17 - Lead of scarlet red colour

Operating as described in Example 15, but employing the following

raw materials:

| | |
|---|---|
| – Micronized kaolin | 58% |
| – Air sifted talc | 26% |
| – Helio Rosso (red) Sol. FG | 9% |
| – Tylose MCA 50 | 3% |
| – Lunadip K | 3% |
| – Riccadil TPL/AL | 1% |

and employing the "flavour" Giacinto 78192 together with Fragola 7982, the expected lead was obtained.

### Example 18 - Lead of purple colour

Operating as described in Example 17, but employing the following raw materials:

| | |
|---|---|
| – Micronized kaolin | 73% |
| – Air sifted talc | 17% |
| – Titanium White RS99 | 2% |
| – Helio Sol. Rosa (pink) E | 2% |
| – Lunadip K | 1% |
| – Tylose MCA 50 | 3% |
| – Riccadil TPL/AL | 2% |

and only employing the "flavour" Giacinto 78192, the expected lead was obtained.

### Example 19 - Lead of violet colour

Operating as described in Example 7, but employing the following raw materials:

| | |
|---|---|
| – Micronized kaolin | 72% |
| – Air sifted talc | 17% |
| – Titanium White RS99 | 2% |
| – Helio Violetto (violet) Sol. EB | 2% |
| – Tylose MCA 50 | 3% |
| – Lunadip K | 2% |

- Riccadil TPL/AL                                          2%

and employing the "flavour" Mirtillo 7987 together with Violetta 78191/1, the expected lead was obtained.


Example 20 - Lead of dark green colour

Operating as described in Example 14, but employing the following raw materials:

- Micronized kaolin                                       60%
- Air sifted talc                                         19%
- Blue Heliogen 6840                                       4%
- Giallo (yellow) Helio Sol. 5GX                           3%
- Pure Oxy Black 3069                                      2%
- Titanium White RS 99                                     4%
- Tylose MCA 50                                            3%
- Riccadil TPL/AL                                          1%
- Lunadip K                                                3%
- Dowoil                                                   1%

and employing the "flavour" Tiglio 78134/T together with Peppermint 78187, the expected lead was obtained.


Example 21 - Lead of ultramarine colour

Operating as described in Example 1, but employing the following raw materials:

- Micronized kaolin                                       64%
- Air sifted talc                                         24%
- Titanium White RS99                                      2%
- Blue poliogen L6420                                      5%
- Methylcellulose                                          4%
- Lunadip K                                                1%

and employing the "flavour" Lavanda K50F instead of Rosa 3009, the expected lead was obtained.

Whereas the invention was described in detail with reference to specific embodiments, it is apparent to the man of the art that variations and modifications can be made without departing from the spirit and scope of the invention.

What we claim is:

1. Lead for pencils which is endowed with substances which are able to exhale scents.

2. Process for preparing leads as defined in claim 1, said process comprising giving to leads said substances which are able to exhale scents through immersion into the grease bath.

3. Process according to claim 2, in which the grease bath consists in a mixture of two waxes, one having drop point in the range from 55.70° to 59.70°, the other having drop point in the range from 85.20° and 89.20°, and of substances which are able to exhale scents.

4. Process according to claim 3, in which said two waxes are carnauba wax having drop point 87.20° and vegetable wax having drop point 57.70° and said substances which are able to exhale scents are resistant to temperatures from 110° to 120°C.

5. Process according to claim 4, in which per cent ratios of bath ingredients are:
- vegetable wax with drop point 57.70°                    40%
- carnauba wax with drop point 87.20°                     20%
- substances which are able to exhale scents              40%

6. Process according to any of claims from 2 to 5, in which pigments which give to leads colours have a fats resistance higher than 3.

7. Process according to claim 6, in which said pigments have fats resistance 5.

8. Lead for pencils which is prepared by means of a process accord‌ing to any of claims from 2 to 7.

9. Lead for pencils which is substantially produced according to a process as herein described with peculiar reference to Examples from 1 to 21.

10. Pencil which has as writing part a lead according to claims 1, 8 or 9.

0055226

Application number

EP 81 83 0149

## European Patent Office

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | CH - A - 246 987 (TH. SAKOWSKI et al.)<br>* Claims; lines 14-18 and 46-50 * | 1,2 | C 09 D 13/00 |
| PX | PATENTS ABSTRACTS OF JAPAN, vol. 5, no. 98 (C-60) (770)<br>& JP - A - 56 41273 (KAZUHIKO SEKIGUCHI) (17-4-81)<br>* Whole abstract * | 1,2 | |

**TECHNICAL FIELDS SEARCHED (Int.Cl. 3)**

C 09 D 13/00
        11/00
        11/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search<br>The Hague | Date of completion of the search<br>29-03-1982 | Examiner<br>DE ROECK | |

EPO Form 1503.1   06.78